# EUROPEAN PATENT APPLICATION

(11) **EP 0 856 392 A2**
(43) Date of publication of application: **05.08.1998**
(21) Application number: 98100108.4
(22) Date of filing: 07.01.1998
(51) Int. Cl.: B29C 49/42, B29C 31/00

(54) **Method and apparatus for producing containers made of themoplastic material**

(30) Priority: 29.01.1997 IT PN970007
(71) Applicant: Zoppas, Matteo, 33074 Fontanafredda, Pordenone (IT)
(72) Inventor: Zoppas, Matteo, 33074 Fontanafredda, Pordenone (IT)
(74) Representative: Giugni, Valter

(57) **Abstract**

Method and apparatus for the production of hollow bodies of thermoplastic material, in particular bottles, comprising the consecutive phases of construction of plastic preforms, possible temperature conditioning thereof, and blow moulding of said preforms, the supply of said preforms to said conditioning and blow moulding phases being obtained through a continuous flow of preforms, wherein subsequently to the preform construction phase and in advance of these preforms being conditioned, said preforms are re-routed, caused to undergo a sequence of auxiliary phases adapted to receive, handle, store, sort out and transport, even partially, the bulk of the so obtained preforms to the next conditioning and blow moulding phases.

The conditioning phase makes use of dedicated heating means that are distinct from the heating means in the conditioning phase on the main line of the apparatus, the latter being also capable of transforming preforms into bottles by solely using preforms from external sources, while having its own preform moulding station inactive, or vice-versa moulding only preforms while its blow moulding station is inactive.

## Description

The present invention refers to an improved method and apparatus for the large-scale production of containers made of a thermoplastic material, such as in particular polyethylene terephtalate (PET) and polypropylene (PP), intended for applications involving their being filled with liquids that may be also at quite elevated temperature and/or contain CO₂ (carbon dioxide) gas.

In the field of technologies and machines for producing containers of the above cited kind there are a number of developments and improvements aimed at obtaining, on the one side, increasingly robust and improved containers, capable of being used for both hot-filled liquids and carbonated beverages, and, on the other side, production processes and related apparatuses that are capable of manufacturing said containers in an increasingly reliable, cost-effective, versatile manner to increasingly high quality standards in an industrial context of very large-scale production.

Such production processes are generally known to be able to be schematically divided into two basic typologies, ie. single-stage and two-stage processes.

In a two-stage process, a preform, or parison, which has been produced separately in advance, and which is in a substantially amorphous state, is heated again up to its preferred molecular orientation temperature, in correspondence of which it is then blow moulded into its desired shape. As used or referred to in this particular context, a two-stage process shall in all cases be understood to mean any process producing a preform, or parison, that must then be heated up again from room temperature to the appropriate temperature for blow-moulding purposes.

Single-stage processes are on the contrary called in this way due to the fact that they are capable of producing the so-called preform or parison, transferring such a preform or parison from the injection or extrusion mould (after allowing it to cool down to any appropriate temperature) to a conditioning station, where it is able to level evenly off at a temperature of preferred molecular orientation. Said preform or parison is then transferred to a blow-moulding die, where it is moulded into its ultimate, desired shape.

Inherent to any single-stage process there is the fact that an uneven heat distribution is unfailingly brought about in the cross-sectional direction of the wall thickness of the preform when the latter is transferred from the injection or extrusion mould.

For this reason, the patent literature covering single-stage processes discloses in almost all cases a final forming or moulding stage of the container of thermoplastic material which is in some way or other carried through a conditioning station to reach an even wall temperature throughout the cross-section of the same wall, said temperature corresponding to the preferred molecular orientation temperature of the thermoplastic resin involved.

Similarly, it is generally known that, in a modern single-stage process and apparatus for the production of plastic (PEN or PET) bottles, the time required for moulding the preforms or parisons (filling of the injection moulds with the molten resin, possible compression of said resin, cool-down, ejection/removal from the mould, etc.) is considerably longer of the overall time that is on the other hand required to blow mould the same preforms to their ultimate shape.

Such a difference in operational time requirements is such as to set, if it is not compensated for or corrected in any other suitable manner, clear and serious limitations to the actual output capabilities of the apparatus, as well as to cause the overall economic efficiency of the same apparatus to be drastically reduced.

In consideration of such disparity in the operational times required by the two above mentioned subsequent process phases, the four patents that are cited shortly below as an example propose in fact various respective technical solutions aimed at "levelling off", in a single-stage apparatus, the production of the preforms and the subsequent blow-moulding stage:
US 4,372,910 to VAN DORN COMPANY
US 4,313,720 to EMHART INDUSTRIES, INC.
US 4,261,949 to EMHART INDUSTRIES, INC (IT 1,105,717)
US 4,140,464 to EMHART INDUSTRIES, INC.

One among the most significant advantages claimed by the above listed patents refers to the fact that, since the preform moulding operation takes a considerably longer time, which quite often is a multiple of the time required by the subsequent blow-moulding operation, it is not necessary to wait, at the end of a blow-moulding operation, for a subsequent preform moulding operation to reach its conclusion (which thing would lead to a fully inadequate efficiency of the blow-moulding station), since through a multiplication in parallel and a process for cyclically feeding a plurality of preform moulding moulds, which in turn are adapted to feed a plurality of blow-moulding stations, a better utilization of the whole production plant is allegedly obtained.

In practice, all of the four patents cited above call therefore for a number of preform injection moulding stations to be provided that is appropriately higher than the number of blow-moulding stations, in view of balancing, albeit in various manners, the production flow from the first to the second phase of the process.

However, in the present industrial manufacturing context characterized by an extreme competitivity and, at the same time, by a growing demand of manufacturing flexibility and interchangeability among the outputs of manufacturing phases that may be carried out at production sites distributed on various locations, it is increasingly being found that, in practice, a traditional single-stage plant, how well it may also be balanced and conceived from a production efficiency point of view, will never allow for some exisitng opportunities to be appropriately seized in view of further boosting the overall efficiency of a single-stage machine when the latter is no longer considered a separate machine, but rather as a component part that is intended to perform just a particular task of a bigger, more complex "production system", of which said machine is an absolutely necessary part, but not the only one.

In other words, production and/or logistic situations may arise so that, even if the utilization of the single-stage machine is optimized, the same does not occur as far sa the utilization of the other factors of production is concerned, quite possibly owing to the very rigidity imposed by the constraints brought about by the optimization of the single-stage machine.

Production inefficiencies are in this way created that are real, albeit hidden ones, in the sense that their cost is not disclosed by any traditional profit and loss account, since the case is here of costs that are due to failure to take advantage of existing opportunities for global optimization of a complex production system.

In particular, in the case of an integrated system for producing beverage-filled bottles, in which the bottle filling operation follows immediately the bottle production phases, following real situations come quite often to light and have therefore to be coped with:
A) Need for bottles to be produced intended to be filled in close succession with lots of different types of beverages, such as plain or carbonated water, tea, fruit juices, beer, etc., ie. bottles that are inherently different and can therefore only be produced starting from correspondingly different preforms; in all such cases it is of paramount importance for the preforms to be able to be changed as quickly as possible: this is quite obviously simply not possible if the preform moulds have to be changed and the machine re-started and re-aligned correspondingly; it would therefore be highly desirable for previously moulded preforms to be able to also be introduced in the blow-moulding phase of the process, possibly even such preforms coming from other production sites and/or plants, along with the preforms produced in the first stage, preferably without interrupting the production of said first stage and alternating according to a lot-by-lot pattern the preforms from the various sources before the same enter the conditioning and blow-moulding phase.
B) The so-called "seasonal" effect, ie. the generally known situation arising from the fact that, during certain seasons the request for particular types of beverages, and therefore also of particular types of bottles, is markedly higher than in other seasons; in such cases, during "low-season" and therefore low-demand periods, single-stage machines would be compelled to work at reduced rates, under resulting loss in the overall efficiency thereof.
   In all such cases, it would therefore be of great advantage to have the possibility of going on producing preforms with an optimized preform-production cycle, while supplying the blow-moulding phase only with such quantity of preforms as actually necessary for producing the equivalent quantity of actually requested bottles, and putting the remaining amount of preforms to storage for later use in the subsequent "high-season" periods.
   Along with the above cited needs and circumstances, that could be defined here as being determined by "external" or "market" factors, further needs have generally to be coped with, which are more properly ascribable to the normal and correct operation of the machine and the management thereof, even in connection with the request of bottles coming from the subsequent filling stations.
   Typically, these further needs may arise from any of the following conditions:
C) interruption for any reason whatsoever of the bottle filling phase and resulting need for the production of bottles to be interrupted as well or, alternatively, for the production of bottle, or some other phjase of the whole production process, to be anyway continued under utilization of intermediate buffer storage facilities, as well as facilities to enter again the stored material in the normal production process or line when the request is resumed; this case usually occurs in a programmed and systematic manner when for instance the filling phase is not a continuous one, but is on the contrary interrupted regularly due to workshifts considerations; in this case, also the production of bottles must be interrupted accordingly, while the production of preforms may on the contrary be allowed to continue, said preforms being then stored, made available and blow-moulded in the subsequent bottle filling shifts, since the blow-moulding phase is performed in a much quicker manner than the preform moulding phase;
D) interruption for any reason whatsoever of the preform moulding phase, owing for instance to a failure, maintenance needs, mould replacement and the like, in front of a persisting need to anyway go on regularly with the bottle production and filling phases;
E) interruption for any reason whatsoever ot the preform blow-moulding phase, owing for instance to a failure, maintenance requirements, etc., with the unavoidable result of having to also interrupt the bottle production and filling phases of the process; this however would not prevent the sole production of preforms from being regularly continued; while this would certainly bring about an overall improvement in the utilization of the machine, it is just not feasible from a technical point of view in a rigidly integrated single-stage machine;
F) unexpected increase, or equally unexpected reduction, in the bottle filling rate under corresponding need to change the bottle production rate accordingly; with a traditional single-stage machine that is optimized on the basis of a specific cycle time, such variations in production rates are substantially impossible to cope with, owing actually to the rigidity and the synchronism of the factors involved in the production process.

Now, not a single one among the afore cited patents actually discloses any kind of solution that may be capable of solving the above described problems, since all of them solely consider an own method aimed basically at optimizing an integrated single-stage machine, which is substantially unaffected by and independent of what may actually occur in some parts of the same machine and, above all, unaffected by and independent of the variables that are introduced by the bottle production and filling system in general.

In particular the patents US 4,313,720 and US 4,140,464 call for the provision of temporary or buffer storage means to be situated between the preform moulding and the blow-moulding phases, said means being substantially assigned the task of aggregating an appropriate number of preforms as they are moulded, and sending them in an orderly manner to the blow-moulding equipment, with a waiting or holding time that must be sufficiently short so as to prevent such preforms from cooling down.

As it can be noticed, no one among the above cited patents does actually consider the ambient that is external to the single-stage machine itself and to even a smaller extent takes the trouble of proposing something that is capable of solving the above mentioned problems connected to a loss of efficiency due to a failure to take advantage of the existing opportunities of global optimization.

In accordance to the above considerations, it therefore is a main purpose of the present invention to provide a single-stage process for the production on an industrial scale of a thermally stable container of thermoplastic resin, wherein use is made of a method and an apparatus that are capable of eliminating the afore cited drawbacks, are fully reliable and easily implemented with the use of known, readily available techniques, and are further capable of being easily adapted to various types of even existing plants.

Such main aim of the present invention, along with a number of further ones that will become apparent and be described in greater detail further on in the following description, are reached in a method to mould bottles of thermoplastic material, which are preferably filled immediately after their production, comprising the phases of moulding plastic preforms, possibly conditioning the same preforms to maintain an adequate temperature thereof, and blow moulding said preforms so as to obtain complete bottles at the end of said blow-moulding phase, wherein after said preform moulding phase, and before said preforms are sent to the conditioning phase, if any, the same preforms are re-routed, allowed to undergo a sequence of auxiliary phases adapted to receive, handle, store, sort out and convey, even partially, the whole amount of so obtained preforms to the final conditioning and blow moulding phase.

In a preferred manner, said auxiliary phases are also adapted to receive and store preforms of a different origin, ie. from some different source, and to mix and store said preforms coming from said different sources.

Said phases are finally adapted to single out, route and transport in an orderly manner said preforms, which may possibly come from different sources and have been previously mixed and stored up, toward said conditioning and blow moulding phase.

These and further aims and advantages of the present invention will anyhow be more readily and clearly understood by those skilled in the art from the description of a preferred embodiment thereof that is given below in detail by way of non-limiting example with reference to the accompanying drawings, in which:
- Figure 1 is a basic, schematical view of the architecture of an apparatus according to the present invention and, at the same time, indicates symbolically a possible improving variant thereof;
- Figure 2 is a view of an assembly of a first group of individual machines joined together into an apparatus according to a preferred embodiment of the present invention;

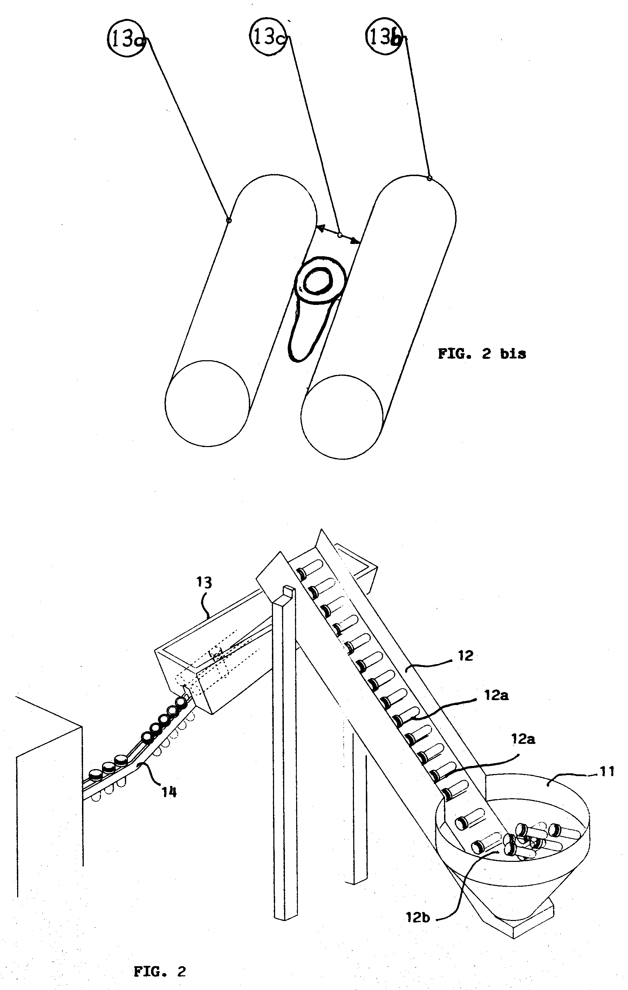

- Figure 2bis is an enlarged view of a detail of Figure 2;

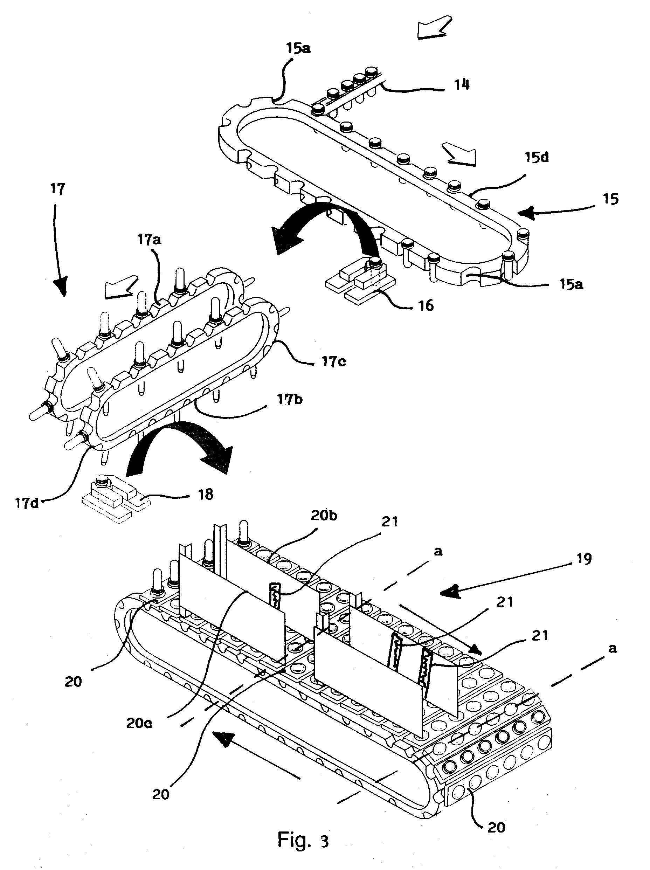

- Figure 3 is a view of an assembly of a second group of further individual machines according to a preferred embodiment of the present invention;

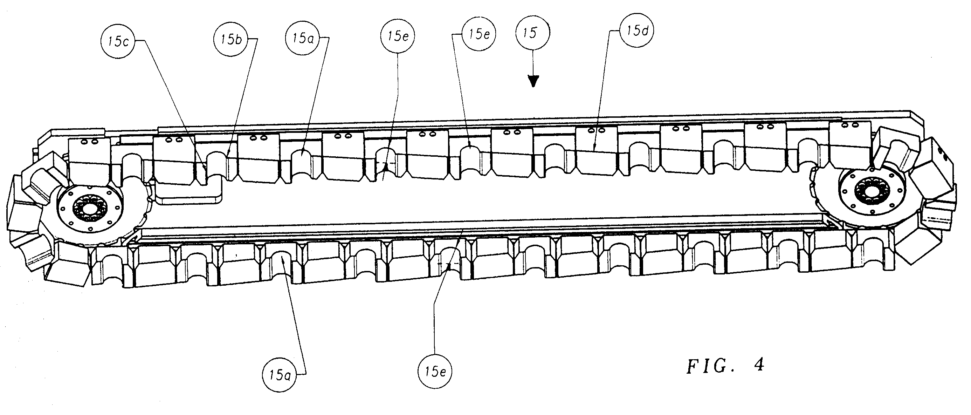

- Figure 4 is a prespective view of a machine of Figure 3;

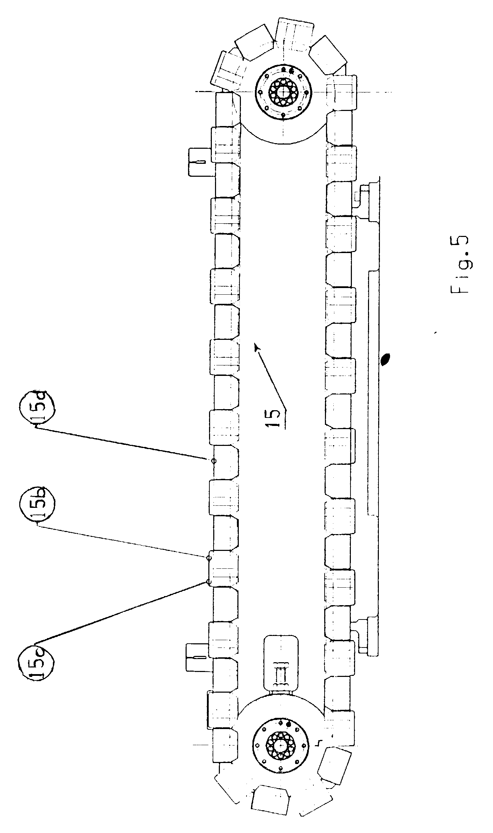

- Figure 5 is an elevational plane view of the machine illustrated in Figure 4;

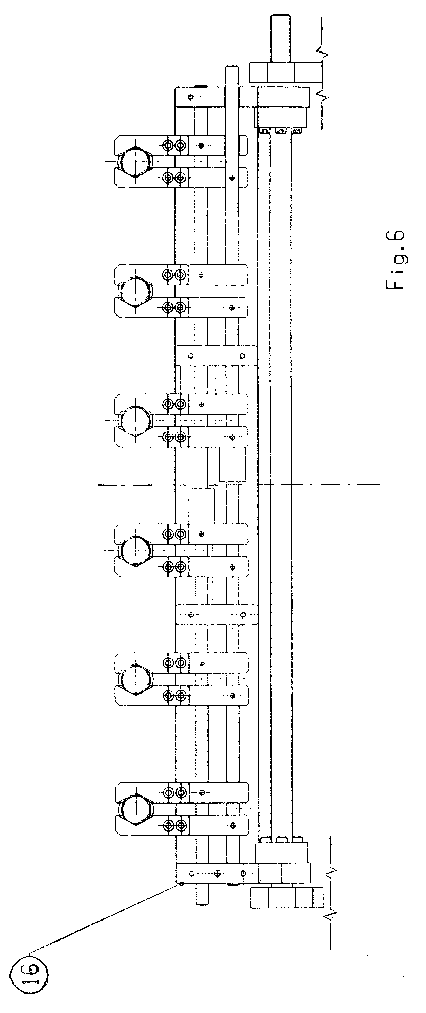

- Figure 6 is a schematical top plane view of a handling device illustrated in Figure 3.

The basic peculiarity of the present invention is given by the introduction of a form of functional separation or disconnection between the first stage, in which the preforms are moulded, and the second stage, in which said preforms are blow-moulded into their final shape, so as to allow said two stages to operate in a fully independent manner; such an independence of the two stages from each other is used, as this will be described in greater detail further on, to obtain following distinct, selective manners of operation:
1) Operation of the preform moulding stage only, whereas the blow-moulding stage is at a standstill;
2) Operation of the blow-moulding stage only, whereas the preform moulding stage is not operating and the preforms are taken from an appropriate buffer storage that may be pre-established and supplied in a variety of manners;
3) Mixed operation, in the sense that both preform moulding and blow-moulding stages are activated, however with a surplus in the output of preforms, said surplus being then taken off line for later use in any of a variety of manners, in the same apparatus or in different plants;
4) Mixed operation, in the sense that both preform moulding and blow-moulding stages are activated, however with a surplus in the output of bottles for the production of which use is made at the same time of both preforms moulded by the first stage of the same plant or apparatus, which may in this way operate advantageously at a reduced rate, and preforms that are taken from an appropriate off-line buffer storage, all such preforms being of course appropriately added to and mixed with each other.

Such basic modes of operation may of course give rise to any number of further modes that are combinations of said basic modes, in accordance with the various operational needs and requirements that may prevail as described above.For instance, a fifth combined mode of operation can be easily thought of, which consists substantially in an aletrnate sequence of the mixed modes of operationdescribed under 3) and 4) above, particularly in accordance with the amount of bottles which are required in each moment for filling.

However, such a functional separation must be introduced in a basically single-stage apparatus that shall remain such, ie. shall preserve all peculiarities of such types of plants, with particular reference to the possibility for the various operations to be carried out in an automatic and rigidly organized sequence within a pre-established cycle time applying to the entire plant or apparatus.

The need therefore arises to start from a single-stage plant, to which the required step-up modifications shall then be added.

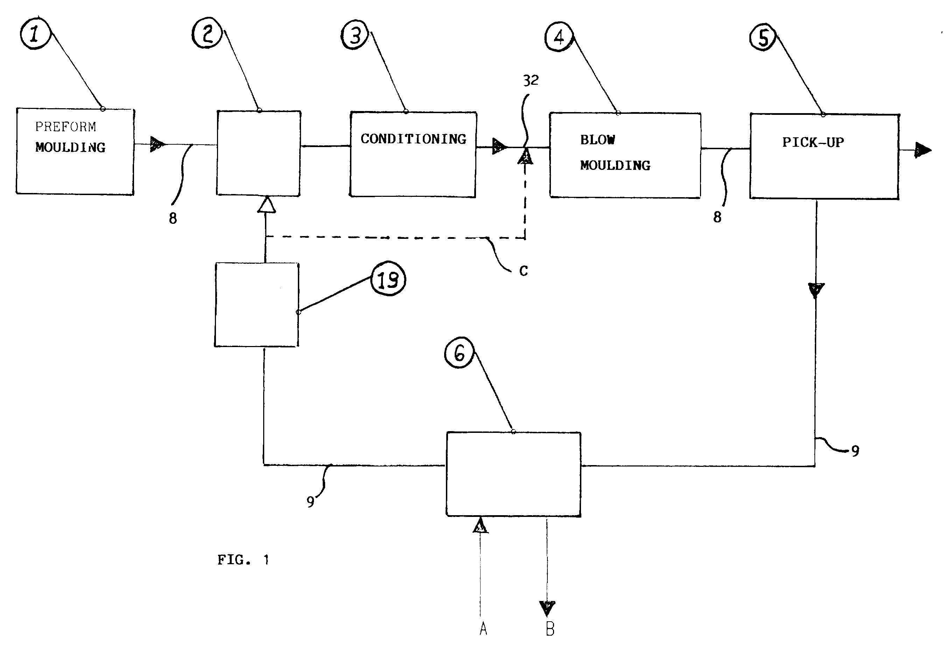

With reference to Figure 1, which illustrates a symbolic block diagram of a preferred embodiment of the present invention, it can be noticed that the method and the apparatus according to the present invention are implemented in a bottle production line that is arranged as described below:
- At the beginning of said line there is arranged a preform production unit 1, wherein such a unit 1 may indifferently be constituted by any of the variety of types of apparatuses existing to such a purpose, even using or combining different technologies. Substantial is on the contrary the fact that such a unit 1, however it may also be constituted or may operate, is adapted to produce preforms in a continuous sequence that is capable of being synchronized with the subsequent apparatuses in the plant.
- The so produced preforms are then picked up by a conveyor means 8 that transports them in asequence through a reintroduction means 2, which shall anyway not be described here any further since such means for the reintroduction of orderly and singled-out sequences of preforms are generally within the ability and the skill of anyone skilled in tha art, then a conditioning station 3, in which the temperature of the body of the preform is increased and levelled off in the usual manner, and a blow-moulding station 4, to which the same general considerations apply as already set forth in connection with the above cited preform production unit 1, said preforms being finally conveyed through a pick-up station 5 arranged downstream of said blow-moulding station along the flowpath of said conveyor means 8.

From said pick-up station 5 a programmable amount of preforms can be selectively re-routed out of said conveyor means 8 and picked up by second conveyor means 9, said preforms being in this case taken care of by means 6 that are generally referred to as preform receiving, handling, storage and sorting means.

Said means 6 are also adapted to receive a plurality of preforms from different, ie. external sources, which is in a conventional manner indicated with the arrow A, as well as to transfer toward other destinations, which are generally indicated with the arrow B, an equally generic, but programmable amount of preforms originating from the unit 1 and transferred, after the various passages as described above, on to said means 6.

From such means 6, after the operations that may possibly have been performed there, said preforms are then ready for being reintroduced again, through said reintroduction means 2, in the conveyor means 8 supplying the main bottle production line.

It could be easily inferred that the most immediate solution is the one that calls for the preforms returning in this way to the conveyor line 8 to be conditioned in their temperature by said conditioning station 3 that is provided to perform exactly such a task; however, the need arises here to duly consider the basic difference existing between the preforms that have been just moulded and the ones that have on the contrary been recirculated through the conveyor line 9: in fact, while the first ones are still at an elevayed temperature, since they have just been moulded, the other ones can be definitely cold, since they may for instance have been produced a long time in advance and kept stored for an equally long time.

This difference in the temperature of the various preforms has the consequence that the conditioning station 3, while fully adequate to cope with preforms that are coming directly from the moulding phase, is quite obviously clearly inadequate in view of the possibility of conditioning preforms coming from said means 6 to the desired temperature conditions.

In order to overcome such a serious drawback, it is advantageous for an auxiliary conditioning station 19 to be arranged between said means 6 and the reintroduction station 2, as well as to provide said auxiliary station with the whole set of overall features and characteristics as required to ensure a correct, complete temperature conditioning of the preforms, while of course taking into due account the flowpath that must be covered by said preforms to reach the blow-moulding phase, as well as the waiting time that must elapse before said preforms actually reach said blow-moulding phase.

It will of course be appreciated that preforms conditioned in said auxiliary conditioning station 19 will logically not be processed again in the main conditioning station 3.

It might also be assumed that, with reference to Figure 1, it is generally useless for the preforms that are not going to be blow moulded immediately to be allowed to travel on beyond both the conditioning station 3 and the blow-moulding station 4, to be eventually picked up by the conveyor means 8 only downstream of said blow-moulding station, through said pick-up station 5.

It could in fact be objected that both the pick up and the reintroduction in the processing cycle of the preforms can occur in substantially a single station to be arranged, duly configured and controlled, between the preform moulding unit 1 and the conditioning station 3.

However, such a hypothesis of solution, although fully feasible from a technical point of view, proves to be greatly disadvantageous when a closer, overall look is taken at it concerning in particular both its real feasibility, with reference to the space available around the plant, and the fact that, with such a hypothesis of solution, the need arises for the distance from the preform moulding unit 1 to the conditioning station 3 to be considerably increased, thereby impairing the possibility for the preforms intended for immediate blow moulding to be actually allowed to maintain a definite temperature, ie. the temperature that results from the fact that said preforms have just been removed from the respective injection moulds at the unit 1.

Furthermore, what has been explained above with reference to the need for two distinct conditioning stations with different characteristics to be provided, ie. a station dedicated to just moulded preforms and a station dedicated to "cold" preforms, ie. preforms coming from an "off-line" environment, regardless of it being either a temporary buffer, a long-dwelling storage or even an external production source, is stressed again here.

A preferred embodiment is illustrated in Figures 2 through to 6, in which the various apparatuses that make up the essential parts of the plant are shown symbolically to facilitate the understanding thereof.

It can be noticed that the operations performed in connection with such preforms being received, stored, mixed, sorted and singled out and handles in general are carried out also through the use of a hopper 11, means 12 to lift non-prearranged, random pluralities ofpreforms (even if the illustration in Figure 2 shows that such preforms are lifted individually, said preforms can actually be lifted also in clusters, since singling out of said preforms occurs in the subsequent stage or phase), a device 13 for singling out said preforms, a fluted, preferably inclined track 14 for transporting the preforms sequentially, a moving rack 15 for picking up the preforms from said fluted track, and means 16 for trasnferring the preforms from said moving rack to an upright circulator 17.

Said hopper 11 is adapted to rotate about a substantially vertical axis, while the lifting means 12 essentially consist of an inclined, upwards sliding belt that is provided on its outer surface with a plurality of nicks or reliefs 12a adapted to graspt and accomodate a non-prearranged plurality of preforms, said belt being dipped with the lower end portion 12b thereof into the internal volume of said rotating hopper.

The means 13 provided to single out the preforms, ie. sort them out individually, (see Figure 2bis) consist of two substantially similar, parallel rollers 13a, 13b that are inclined downwards and separated by a gap 13c between the respective outer surfaces, when the latter are opposing and facing each other, said gap being slightly larger than the diameter of the body of the preforms and narrower than the neck thereof, so that said preforms can be retained by their neck portion, with the respective body portion hanging downwards within said gap 13c and said preforms aligned therealong.

With reference to Figures 3, 4 and 5, the fluted track 14 on which the by this time singled-out, ie. individualized preforms are placed in due sequence is inclined in a manner that its lower end portion, at which the preforms arrive simply by gravity, extends into the moving rack 15. The latter can be made according to a number of different configurations (in Figure 3 it is shown to rotate on a horizontal plane, while it is shown to rotate on a vertical plane in Figures 4 and 5), moves along a closed-loop path and is provided along its side 15d with a plurality of open, recess-like nicks 15a which are similar to each other, are arranged equally spaced along the rack, and are provided with an inclined edge 15b and the thereto opposite edge forming a corner 15c at at least a right angle with respect to the side 15d of the rack; the depth 15e of said recess-like nicks is such as to enable each of them to accomodate no more than a single preform, and said fluted track 14 comes against said side 15d provided with said nicks with such an inclination and such an orientation as to enable the preforms to be removed one at a time from said nicks, since the moving rack moves in the same direction from the corner-edges 15c towards the respective inclined edge 15b.

Once they are loaded on to said rack, which essentially serves the purpose of spacing out and aligning the preforms, the latter are transferred on to an apparatus, which will be defined an upright circulator 17 here, adapted to handle and arrange the preforms along a path extending on a vertical plane and constituted substantially by two horizontal lengths 17a, 17b that are arranged one above the other and are connected at their extremities by two arcs 17c, 17d in the form of substantially a half circle, as this is best shown in Figure 3. Said upright circulator performs the task of carrying out an auxiliary positioning of the preforms, so as to arrange them in clusters, duly aligned within the same cluster, facing upwards (so as to promote the subsequent conditioning process) and, at the same time, in such a manner as to be easily picked up by simple means in a simple way.

Referring again to Figure 3, it should furthermore be noticed that the auxiliary conditioning stations 19 are preferably constituted by a multiplicity of similar plates 20 in a side-by-side arrangement, each one of them being provided with a plurality of supports that are individually capable of retaining a respective preform. Said plates are driven so as to move horizontally with a translational motion in a direction which is orthogonal to the axis a of the plate; during such a motion, each preform is therefore caused to move along a track that is delimited laterally by two respective, preferably heat-reflecting and refractory walls 20b, 20c on which there are arranged, appropriately oriented towards the interior of the respective track and, therefore, directed towards the trajectory followed by the respective preforms, a plurality of heating elements 21 adapted to heat up the preforms that move along said track in an orderly sequence.

Also illustrated symbolically in Figure 3 are the transfer means 16 and 18 provided for transferring at the same time a plurality of preforms from the moving rack to the upright circulator 17 and from the latter to the conditioning station 19, respectively.

Figure 6 illustrates a possible embodiment of said multiple transfer means. However, it will be appreciated that it is well within the abilities of anyone skilled in the art to implement means for simultaneously handling a plurality of preforms, as well as to conceive suitable pick-up means 5 and reintroduction means 2 for removing the preforms from and placing them again on the conveyor means 8, while adapting such means to any required or desired constructional, dimensional and functional configuration for ensuring any desired geometric and dimensional compatibility, so that they shall not be dealt with any further here.

The operation of the above described apparatus according to the invention is as follows: based on the information given above concerning the construction, along with the general explanations set forth not only under 1) through to 4) above, but also in the description therebelow, said modes and manners of operation can be readily and easily inferred by all those skilled in the art; following points should anyway be particularly stressed:
- the addition of preforms from a different source occurs simply by pouring them, ie. letting them fall into the rotating hopper 11, which therefore mixes the whole bulk of preforms it receives in an irreversible manner;
- similarly, the preforms can theoretically be picked up at any point along the flowpath thereof; it is however fully apparent that the by far optimum point to this purpose is still represented by the hopper 11 or even the lifting means 12, which can in this way be used also to pick up, ie. remove preforms from the hopper;
- all of the above described means, and further ones that have not been described here but are anyway important in view of a correct operation of the whole apparatus, are connected to a central control unit (not shown) so as to be able to operate synchronously, sequentially and consistently with the commands that are set in connection with the selected operation mode, as described for instance under 1) to 4) above.

In a partial departure from what has been stated above about the fully advantageous option of using separate conditioning stations according to the different origin of the preforms, particular circumstances may arise so that it becomes equally advantageous for both conditioning stations, ie. the conditioning station 3 and the conditioning station 19 for the preforms coming from the means 6, to be used in series, since the heating thereof can in this way be carried out in two phases, and therefore with extended heating times, but with less energy supplied by each single station, thereby notoriously promoting an improved levelling off of the temperature in the preforms and, as a result, a less critical blow-moulding phase.

In practice, the conditioning phase in the station 19 would in this case be converted into a pre-conditioning phase to be then coordinated with the main conditioning phase in the station 3 as far as such parameters as timing, power or energy amount, temperatures and the like are concerned.

An interesting variant of the main architecture of an apparatus according to the invention is illustrated conceptually in the same Figure 1, where preforms conditioned by the conditioning station 19 can be noticed to be reintroduced in the conveyor means 8 at a point 32 situated downstream of the main conditioning station 3, as this is shown by the dashed line C; such a variant, with respect to the main architecture, gives a twofold advantage of a more accurate, purpose-riented conditioning and levelling off of the temperature in the preforms coming from said auxiliary means 6, since the passage of the same preforms through the conditioning means 3 is omitted owing to the fact that said preforms have actually already been conditioned in said auxialiary conditioning stations 19; furthermore, the above solution enables the preform moulding station 1 and the respective conditioning means 3 to be fully uncoupled from the remaing portion of the apparatus, so that even the use of that portion of said first conveyor means 8 can be spared, which operates from the outlet side of the preform moulding station 1 up to the outlet side of the respective main conditioning station 3, with a number of both operating and economic advantages since the circulation of the preforms coming from said means 5, and reintroduced by said second conveyor means 9 in the blow-moulding unit 4, is optimized by limiting it to a flowpath which is as short as possible.

It will be appreciated that the invention can be implemented also with methods and apparatuses that differ from the above described ones, but complying substantially with the features and characteristics recited in the appended claims.

## Claims

1. Method for the production of hollow bodies of thermoplastic material, in particular bottles intended in particular for being filled immediately after having been produced, comprising the consecutive phases of construction of plastic preforms, possible temperature conditioning thereof, and blow moulding of said preforms so as to obtain, as a result of said blow moulding operation, said complete bottles, the supply of said preforms to said conditioning and blow moulding phases being obtained through a continuous flow of preforms, **characterized in that** subsequently to the preform construction phase and in advance of these preforms being conditioned, said preforms are re-routed, caused to undergo a sequence of auxiliary phases adapted to receive, handle, store, sort out and transport, even partially, the bulk of the so obtained preforms to the next conditioning and blow moulding phases.

2. Method according to claim 1, **characterized in that** said auxiliary phases are also adapted to receive and store preforms from a different source, which may also have been produced in two-stage plants, at different production sites, even a long time in advance.

3. Method according to claim 2, **characterized in that** said auxiliary phases are adapted to mix and store preforms originating from said different sources.

4. Method according to claim 3, **characterized in that** said auxiliary phases are adapted to single out, transport and send in an orderly manner said individual preforms, which may possibly originate from various sources and have previously been mixed and stored accordingly, to said blow moulding phase and possibly to an auxiliary temperature pre-conditioning phase.

5. Method according to any of the preceding claims, **characterized in that** said auxiliary phases include picking up definitively a part of said preforms to remove them from the main preform transport and delivery flow, thereby preventing the so removed preforms from being routed towards the subsequent temperature conditioning and blow moulding phases comprised in the method.

6. Method according to any of the preceding claims 2 to 5, **characterized in that** the preform construction phase is omitted and solely preforms received in said auxiliary phases are used for producing the bottles.

7. Method according to any of the preceding claims 1 to 4, **characterized in that** the production of bottles is carried out by making solely use of a fraction of the preforms that are so removed definitively from said preform transport and delivery flow.

8. Method according to any of the preceding claims, **characterized in that** said preform production, temperature conditioning and blow moulding phases and said auxiliary phases are coordinated by a central control system that is adapted to act automatically on the operating means that carry out said phases in a manner that each such phase is synchronized with its respective subsequent phase as far as the timing and the involved amounts are concerned, and that control system is capable of acquiring the preform pick-up and/or preform addition data and controlling the respective subsequent phases so as to ensure the required synchronism of both the timing and the amounts of preforms being handled and processed.

9. So-called "single-stage" apparatus for the production of hollow bodies of plastic material, in particular bottles, comprising a first moulding station (1) in which preforms are produced, a blow moulding station (4) in which said preforms are blow moulded into their final shape of finished containers, an intermediate conditioning station (3) in which said preforms are conditioned in their temperature so as to be conferred an optimal temperature distribution pattern in view of the subsequent blow moulding phase, first conveyor means (8) adapted to transport in a sequential and orderly manner the preforms from said first moulding station (1) to said final blow moulding station (4) passing through said intermediate conditioning station (3), **characterized in that** there are provided pick-up means (5) adapted to pick up said preforms placed on said first conveyor means (8) downstream of said blow moulding station (4) and temporally in advance of the conditioning thereof, means (6) adapted to receive, handle, store and sort out the so-picked up preforms, a reintroduction station (2) adapted to reintroduce, even partially, said preforms in said first conditioning means (3) upstream of the blow moulding station (4), and second conveyor means (9) adapted to transport said preforms from said pick-up means (5) to said reintroduction means (2).

10. Apparatus according to claim 9, **characterized in that** said said means (6) adapted to receive, handle, store and sort out preforms, are also adapted to receive and store preforms originating from different sources, which are not produced by said first preform moulding station (1) of said apparatus..

11. Apparatus according to claim 10, **characterized in that** said means (6) are capable of receiving, mixing and storing the preforms originating from different sources.

12. Apparatus according to claim 11, **characterized in that** said means (6) are adapted to single out, transport and orderly deliver said preforms, which may possibly originate from different sources and have previously been mixed and stored accordingly, to the conditioning station (3) and blow moulding station (4).

13. Apparatus according to any of the claims 9 to 12, **characterized in that** said preforms are picked up after having been allowed to pass a first time through the intermediate conditioning station (3) and the blow moulding station (4), that during said first passage of the preforms therethrough said conditioning and blow moulding stations are inactivated, and that said preforms are then replaced at a later moment onto said conveyor means (8) by said reintroduction station (2) arranged upstream of said intermediate conditioning station (3).

14. Apparatus according to claim 13, **characterized in that** auxiliary preform temperature conditioning stations (19) are arranged between said means (3) adapted to receive, handle, store and sort out said preforms that have been so removed from the main apparatus, and said reintroduction means (2), said auxiliary stations being supplied by said second conveyor means (9).

15. Apparatus according to any of the claims 9 to 14, **characterized in that** said reintroduction station (2) is arranged in a position (32) situated between said intermediate conditioning station (19) and said blow moulding station (4).

16. Apparatus according to any of the claims 9 to 15, **characterized in that** said means (6) adapted to receive, handle, store, mix and sort and single out said preforms comprise a hopper (11), lifting means (12) to raise non-prearranged pluralities of preforms, means (13) to single out the preforms, a fluted and preferably inclined track (14) for transporting said preforms sequentially, a moving rack (15) to pick up the preforms from said fluted track, and transfer means (16) to transfer the preforms from said moving rack to an upright circulator (17).

17. Apparatus according to claim 16, **characterized in that** it is provided with one or more of the following features in any combination thereof:
- said hopper (11) is rotating about a substantially vertical axis;
- said lifting means (12) essentially consist of an inclined, upwards sliding belt that is provided on its outer surface with a plurality of nicks or reliefs (12a) adapted to graspt and accomodate a non-prearranged plurality of preforms, said belt being dipped with the lower end portion (12b) thereof into the internal volume of said rotating hopper (11);
- said preform singling-out means (13) consist of two substantially similar, parallel rollers (13a, 13b) that are inclined downwards and separated by a gap (13c) between the respective outer surfaces, when the latter are opposing and facing each other, said gap being slightly larger than the diameter of the body of the preforms and narrower than the neck thereof, so that said preforms can be retained by their neck portion, with the respective body portion hanging downwards within said gap (13c), and said preforms aligned therealong;
- said moving rack (15) moves along a closed-loop path and is provided along a side (15d) thereof with a plurality of open, recess-like nicks (15a) which are similar to each other, are arranged equally spaced along the rack, and are provided with an inclined edge (15b) and the thereto opposite edge forming a corner (15c) at at least a right angle with respect to the side (15d) of the rack; the depth (15e) of said recess-like nicks being such as to enable each one of them to accomodate no more than a single preform, said fluted track (14) coming against said side (15d) provided with said nicks with such an inclination and such an orientation as to enable the preforms to be removed one at a time from said nicks, said moving rack moving in the same direction as defined by said corner-edges (15c) towards the respective inclined edge (15b);
- said transfer means (16) are adapted to simultaneously pick up a plurality of preforms from said rack and place them immediately thereafter, but within the same and single operation, onto said upright circulator (17);
- said upright circulator (17) is adapted to handle and arrange the preforms along a path extending on a vertical plane and constituted substantially by two horizontal lengths (17a, 17b) that are arranged one above the other and are connected at their extremities by two arcs (17c, 17d) in the form of substantially a half circle.

18. Apparatus according to claim 16 or 17, **characterized in that** said auxiliary conditioning stations (19) are constituted by a multiplicity of similar plates (20) in a side-by-side arrangement, wherein each such plate is provided with a plurality of supports (20a) that are individually capable of retaining a respective preform, said plates being driven so as to move horizontally with a translational motion in a direction which is orthogonal to the axis (a) of the plates, wherein during such a motion each preform is therefore caused to move along a track that is delimited laterally by two respective walls (20b, 20c) on which there are arranged, appropriately oriented towards the interior of the respective track and, therefore, directed towards the trajectory followed by the respective preforms, a plurality of heating elements (21) adapted to heat up the preforms that move along said track in an orderly sequence.

19. Apparatus according to any of the claims 9 to 18, **characterized in that** it is capable of operating even with the preform moulding station (1) thereof inactive by solely using preforms from external sources, ie. obtained from said means (6) receiving, handling, storing and sorting out preforms that may originate from different sources.
